# EUROPÄISCHE PATENTSCHRIFT

(11) **EP 0 489 367 B1**
(45) Veröffentlichungstag und Bekanntmachung des Hinweises auf die Patenterteilung: **02.02.1994**
(21) Anmeldenummer: 91120537.5
(22) Anmeldetag: 29.11.1991
(51) Int. Cl.: A01C 15/02, A01C 7/02

(54) **Vorrichtung zum Dosieren von körnigem, rieselfähigem Material**
Apparatus for dosing particulated material
Dispositif pour doser des granulés

(30) Priorität: 03.12.1990 DE 9016388 U; 15.02.1991 DE 4104685
(43) Veröffentlichungstag der Anmeldung: 10.06.1992
(73) Patentinhaber: HERMANN MEYER KG, D-25462 Rellingen (DE)
(72) Erfinder: Artz, Hans, W-2082 Tornesch (DE)
(74) Vertreter: Schulmeyer, Karl-Heinz, Dr.

(56) Entgegenhaltungen:
- DE-A- 3 703 819
- DE-C- 204 675
- GB-A- 1 162 539
- US-A- 2 014 003
- US-A- 3 955 513

## Beschreibung

Vorliegende Erfindung betrifft eine Vorrichtung zum Dosieren von körnigem, rieselfähigem Material nach dem Oberbegriff des Anspruchs 1, mit der das Material, z.B. Kunstdünger, in bestimmter dosierter Menge gezielt an einem bestimmten Ort, beispielsweise im Falle von Kunstdünger im unmittelbaren Bereich der Pflanze bzw. der Pflanzenwurzel, abgegeben werden kann. Die Vorrichtung kann je nach beabsichtigtem Verwendungszweck als tragbares oder stationäres Gerät ausgeführt sein.

Vorrichtungen zum Dosieren von körnigem, rieselfähigem Material sind in der Landwirtschaft z.B. als tragbare Dünger-Dosiergeräte zur Düngung bzw. Nachdüngung von Pflanzen, insbesondere von Pflanzen in Containern, mit körnigem, rieselfähigem Kunstdünger bereits bekannt und im Handel erhältlich. Sie bestehen in der Regel aus einem tragbaren Behälter zur Aufnahme des rieselfähigen Kunstdüngers, einem Zuführrohr, das mit dem Behälter, zweckmäßigerweise mit dem Behälterboden, verbunden ist und den Kunstdünger aus dem Behälter einem am freien Ende des Zuführrohres befestigten Dosierer zuführt. Der Behälter wird üblicherweise über Tragegurte auf dem Rücken einer Person befestigt. In einer Höhe, die leicht von den Händen der Bedienungsperson erreicht werden kann, sind Bedienungselemente zum Öffnen und Schließen des mit dem Kunstdünger gefüllten Zuführrohres vorgesehen. Als Beispiel eines solchen bekannten Gerätes wird das Dünger-Dosiergerät DO '76 genannt, das im "MEYER Katalog 1989/90'' auf Seite 182 abgebildet ist.

Obwohl solche Vorrichtungen relativ einfach zu handhaben sind, hat sich gezeigt, daß bei der großen Menge an z.B. in Containern zu versorgenden Einzelpflanzen in gärtnerischen Betrieben der erforderliche Zeitaufwand für die Düngung jeder Einzelpflanze noch zu groß ist. Dies ist zu einem wesentlichen Teil darauf zurückzuführen, daß die dosierte Kunstdüngermenge, die sich in dem Zuführrohr unterhalb der Bedienungselemente und bis zur Austrittsöffnung aus dem Dosierer befindet, nach dem Öffnen des Dosierers eine gewisse Laufzeit benötigt, bis sie vollständig aus dem Zuführrohr und dem Dosierer ausgeströmt ist. Selbst wenn sich hierdurch für die Düngung jeder Einzelpflanze nur eine zeitliche Verzögerung von z.B. 5 Sekunden ergibt, summiert sich diese bei z.B. 1000 zu düngenden Pflanzen bereits auf 83 Minuten, d.h. nicht viel weniger als 1 1/2 Stunden. Eine Verkürzung dieser Ausströmzeit ist daher wegen der damit verbundenen wirtschaftlichen Vorteile sehr erwünscht.

Ferner weisen die im Handel befindlichen Dünger-Dosiergeräte in der Regel recht aufwendige Konstruktionen auf, mit Handhebeln, Bowdenzügen, Zugfedern, Dosierhülsen u.dgl., wodurch diese Geräte ziemlich wartungsaufwendig und anfällig gegen Störungen sind, die beispielsweise durch zwischen den beweglichen Teilen von Handhebel und Dosierer sich festsetzende feinpulvrige Düngemittel hervorgerufen werden können.

Es sind auch bereits Geräte zum Dosieren von körnigem Material beschrieben worden. So ist aus der DE-PS 204 675 ein Handgerät zum Legen von Rübensamen u.dgl. bekannt, bei dem am unteren Ende eines langen Rohres, das mit dem zu verlegenden Samen gefüllt ist, eine Entnahmevorrichtung angebracht ist, die aus einem um einen Bolzen drehbaren Segment mit einer oberen Vertiefung, in der eine dosierte Samenmenge aufgenommen werden kann, sowie einem mit dem Segment fest verbundenen Legrohr besteht. Das Legrohr kann in den Boden gestoßen und dabei so gekippt werden, daß die in der Vertiefung befindliche Samenmenge freigegeben wird und durch das Legrohr in den Boden fallen kann. Durch eine mit dem Segment in Verbindung stehende Feder werden Segment mit oberer Vertiefung und Legrohr beim Abheben vom Boden wieder in die ursprüngliche Lage gebracht, in der sich die Vertiefung erneut mit Samen aus dem Rohr füllen kann. Dieses Gerät ist verhältnismäßig kompliziert aufgebaut und weist eine Reihe von beweglichen Teilen auf, deren Leichtgängigkeit beispielsweise durch sich zwischen diesen Teilen festsetzende Partikel gestört werden kann. Das einwandfreie Arbeiten des Gerätes ist ferner von einer funktionstüchtigen Feder abhängig, die beim Gebrauch erheblichen Belastungen ausgesetzt ist.

Aus der DE-PS 282 797 ist ein Sästock mit einer am unteren Ende beweglichen Klappe bekannt, die durch einen Hebel bewegt wird. Auch dieses Gerät ist ziemlich kompliziert aufgebaut und weist eine Reihe von beweglichen Teilen auf, die durch sich zwischen den beweglichen Teilen leicht festsetzende Körner störanfällig und daher ziemlich wartungsaufwendig ist.

Schließlich wird in DE-OS 37 03 819 ein tragbares Granulat-Dosiergerät zur Einzeldüngung allein stehender Pflanzen beschrieben, das aus einem langen Rohr mit einem am unteren Ende befindlichen Dosimeter besteht. Das Dosimeter weist zwei ineinander geschobene, gegeneinander begrenzt verschiebbare Rohrstücke und ein im inneren Rohr angebrachtes Dosierröhrchen auf und kann durch einen Bodenhebel mittels Rückholfeder oder durch einen Bowdenzug in die Ruhestellung bzw. Entleerstellung gebracht werden. Das Dosimeter kann nur funktionieren, wenn die ineinander geschobenen Rohrstücke gegeneinander frei beweglich sind. Da die Erfahrung zeigt, daß sich das Festsetzen von kleinen Partikeln zwischen beiden Rohrstücken in der Praxis nicht vermeiden läßt, ist auch dieses Gerät ziemlich störanfällig und läßt sich zudem aufgrund seiner Konstruktion nur mühsam reinigen.

Der Erfindung liegt die Aufgabe zugrunde, eine Vorrichtung zum Dosieren von körnigem, rieselfähigem Material., z.B. Kunstdünger, zu schaffen, die sich durch eine möglichst robuste, weitgehend wartungsfreie Konstruktion auszeichnet, leicht und sicher handhabbar ist und insbesondere die abgemessenen Materialmengen erheblich rascher aus dem Dosierer gezielt an einen bestimmten Ort, beispielsweise im Falle von Kunstdünger in den unmittelbaren Bereich der Pflanzen, abgibt, als dies bei den bisher bekannten Dosiergeräten möglich ist, so daß die oben erwähnten nachteiligen zeitlichen Verzögerungen beim Ausströmen z.B. des Kunstdüngers ganz oder zumindet weitgehend vermieden werden können.

Diese Aufgabe wird erfindungsgemäß durch eine Vorrichtung zum Dosieren von körnigem, rieselfähigem Material nach dem Oberbegriff des Anspruchs 1 mit den im kennzeichnenden Teil des Anspruchs 1 angegebenen Merkmalen gelöst. Bevorzugte Ausführungsformen der erfindungsgemäßen Vorrichtung sind in den Unteransprüchen gekennzeichnet.

Es wurde überraschend gefunden, daß mit der erfindungsgemäßen Vorrichtung die gestellte Aufgabe in einfacher Weise und im wesentlichen ohne Verwendung von Bowdenzügen, Handhebeln, Federn, Dosierhülsen u.dgl. gelöst werden kann, wobei die einfache Konstruktion eine wirtschaftlich vorteilhafte Herstellung der Vorrichtung ermöglicht und ein einwandfreies Funktionieren ohne besondere Wartung gewährleistet. Das Öffnen und Schließen des freien Endes des Dosierrohres und das Beschicken der Dosierkammer mit körnigem, rieselfähigem Material sowie ihre Entleerung wird durch einen Dosierhebel bewirkt, der so konstruiert ist, daß er aufgrund seiner beweglichen Aufhängung zwei verschiedene Grenzstellungen, nämlich eine Ruhestellung und eine Arbeitsstellung, einnehmen kann, in denen er die ihm jeweils zugedachten Funktionen des Füllens und Entleerens der Dosierkammer erfüllen kann, wobei wesentlich ist, daß der Schwerpunkt seiner Hebelmasse möglichst tief liegt und die vom Eigengewicht des Dosierhebels ausgehende Kraft ausreicht, um das durch Aufdrücken des Dosierhebels auf eine feste Unterlage, z.B. den Boden, geöffnete freie Ende des Dosierrohres beim Anheben des Dosierhebels von der festen Unterlage wieder selbsttätig zu schließen. Durch die erfindungsgemäße Anordnung und Gestalt des Dosierhebels bildet dieser zusammen mit dem entsprechenden Teil der Innenwand des Dosierrohres eine Dosierkammer von gegebenenfalls variierbarer Größe. Bei der im Gebrauch normalerweise schrägen Stellung von Zuführ- und Dosierrohr befindet sich eine Aussparung an der Oberseite des Dosierrohres. Diese Aussparung ist so an die Dicke des Dosierhebels angepaßt, daß der obere Teil des Dosierhebels mit Hebelkralle gerade leichtgängig in der Aussparung bewegbar ist.
In der schrägen Stellung von Zuführ- und Dosierrohr befindet sich der Dosierhebel, wenn keine äußeren Kräfte auf ihn einwirken, in einer Ruhestellung, in der seine der Aussparung abgewandte Seite an der unteren Kante des freien Endes des Dosierrohres dicht aufliegt, wodurch die Dosierkammer unten geschlossen ist, während sie durch die Stellung des oberen Teils des Dosierhebels mit Hebelkralle gleichzeitig nach oben zum Dosier- und Zuführrohr geöffnet ist, so daß rieselfähiges Material aus dem Zuführ- und Dosierrohr in die Dosierkammer strömen kann.

Die Arbeitsstellung des Dosierhebels wird dadurch erreicht, daß man das untere Ende des Dosierhebels mit seiner Auflagefläche an einem Ort, an dem die das rieselfähige Material enthaltende Dosierkammer entleert werden soll, auf eine stabile Unterlage, z.B. auf die Bodenoberfläche einer zu düngenden Pflanze in einem Container, drückt. Beim Aufdrücken auf den Boden dreht sich der Dosierhebel so, daß sein oberer Teil mit der Hebelkralle durch die Aussparung ins Innere des Dosierrohres gleitet, bis die Kante der Hebelkralle, die zweckmäßigerweise spitz zulaufend ausgestaltet ist, an der Innenwand der der Aussparung gegenüberliegenden Seite des Dosierrohres dicht anliegt, wodurch die Dosierkammer nach oben abgesperrt wird, so daß kein Material mehr in die Dosierkammer eintreten kann. Gleichzeitig wird der untere Teil des Dosierhebels in Gegenrichtung bewegt, wodurch sich das freie Ende des Dosierrohres und damit auch die Dosierkammer nach unten öffnet und die in der Dosierkammer befindliche Materialmenge aus der Dosierkammer auf den Boden fällt Beim Anheben der weiterhin in der Schräglage gehaltenen Vorrichtung vom Boden fällt der Dosierhebel aufgrund seiner erfindungsgemäß vorgesehenen Schwerpunktlage durch sein Eigengewicht wieder in die Position der Ruhestellung zurück, bei der das freie Ende des Dosierrohres und damit auch die Dosierkammer unten geschlossen und die Dosierkammer gleichzeitig oben geöffnet wird, so daß sie sich erneut mit dem aus dem Dosierrohr nach unten fließenden Material füllen kann, bis die gewünschte Materialdosis in der Dosierkammer ist. Danach kann der Dosierhebel durch Aufdrücken auf den Boden erneut in die Arbeitsstellung gebracht werden, in der sich die Dosierkammer entleert, usw. Der beschriebene Zyklus kann beliebig oft wiederholt werden, beispielsweise im Falle einer Beladung mit Kunstdünger, bis sämtliche Pflanzen gedüngt sind.

Mit dieser verblüffend einfachen Konstruktion kann man das körnige, rieselfähige Material, z.B. den Kunstdünger, in der abgemessenen Menge gezielt an den gewünschten Ort, z.B. an die zu düngenden Pflanzen, möglichst im Bereich der Pflanzenwurzeln, bringen. Im Falle der Anwendung und Verteilung von Kunstdünger besitzt die erfindungsgemäße Vorrichtung den Vorteil, daß die Pflanzen die erforderliche Kunstdüngermenge gezielt auf eng begrenztem Raum erhalten, was den Vorteil hat, daß nur so viel Dünger gestreut werden muß, wie zur Versorgung der Pflanzen nötig ist. Im Unterschied zu einer breitflächigen Düngung ist dies nicht nur billiger, sondern bewahrt gleichzeitig die Umwelt vor einer unerwünschten Überdüngung.

Von besonderem Vorteil ist die erfindungsgemäße Plazierung der gesamten Materialdosis in der kompakten Dosierkammer, die sich, wie vorstehend erläutert, bei entsprechender Stellung des Dosierhebels direkt nach unten öffnet, wobei die Austrittsöffnung am freien Ende des Dosierrohres so bemessen ist, daß die gesamte betreffende Dosis praktisch auf einmal, d.h. ohne zeitliche Verzögerung, aus der Dosierkammer heraus und an den gewünschten Ort, z.B. auf den Boden im unmittelbaren Bereich einer zu düngenden Pflanze, fällt. Dadurch wird beispielsweise der erforderliche Zeitaufwand für die Düngung jeder Einzelpflanze gegenüber dem Zeitaufwand bei den oben erwähnten bekannten Vorrichtungen erheblich verkürzt.

Die Erfindung wird nachfolgend anhand von Zeichnungen, in denen tragbare Ausführungsformen der Vorrichtung dargestellt sind, näher erläutert. Es braucht nicht besonders betont zu werden, daß durch einfache, dem Fachmann ohne weiteres geläufige Maßnahmen die Vorrichtung auch stationär eingesetzt werden kann, wobei die erforderlichen taktförmigen Bewegungen der Vorrichtung zum Auf- und Absenken des Dosierhebels, durch die dieser von der Ruhestellung in die Arbeitsstellung und zurück gebracht wird, von entsprechenden mechanischen und elektrischen Einrichtungen übernommen und gesteuert werden können.

Es zeigen:
- Figur 1: die Gesamtansicht eines tragbaren Dünger-Dosiergerätes, getragen und gehalten von einer Person, mit der erfindungsgemäßen Dosiervorrichtung;
- Figur 2: eine Ausführungsform der Vorrichtung im Längsschnitt mit dem Dosierhebel in Ruhestellung;
- Figur 3: eine andere bevorzugte Ausführungsform der Vorrichtung im Längsschnitt mit dem Dosierhebel in Arbeitsstellung;
- Figur 4: die in Figur 3 dargestellte Ausführungsform im Längsschnitt mit verkleinerter Dosierkammer und dem Dosierhebel in Ruhestellung;
- Figur 5a: eine Ausführungsform des Dosierrohres im Längsschnitt;
- Figur 5b: die in Figur 5a dargestellte Ausführungsform des Dosierrohres in Draufsicht;
- Figur 5c: die in Figur 5a dargestellte Ausführungsform des Dosierrohres in Vorderansicht;
- Figur 6a: eine besondere Ausführungsform des Dosierhebels in Seitenansicht;
- Figur 6b: die in Figur 6a dargestellte Ausführungsform eines Dosierhebels in Draufsicht.
- Figur 7: eine weitere bevorzugte Ausführungsform der Vorrichtung im Längsschnitt mit speziellem Dosierhebel in Ruhestellung; und
- Figur 8: die in Figur 7 dargestellte Ausführungsform im Längsschnitt mit vergrößerter Dosierkammer und dem Dosierhebel in Arbeitsstellung.

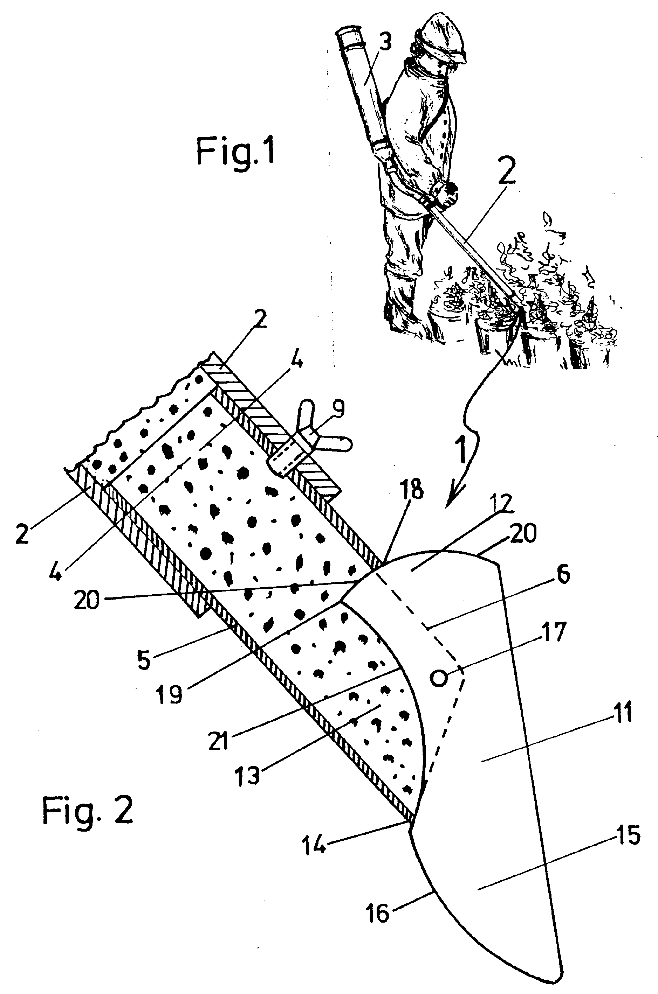

In Figur 1 ist eine Gesamtansicht einer tragbaren Vorrichtung zum Dosieren von körnigem, rieselfähigem Material dargestellt, die aus einem Behälter 3 zur Aufnahme des Materials, z.B. von körnigem Kunstdünger, einem mit dem Behälter 3 verbundenen Zuführrohr 2 und dem am freien Ende des Zuführrohres 2 abnehmbar befestigten erfindungsgemäßen Dosierer 1 besteht.

In Figur 2 ist eine besonders einfache Ausführungsform des Dosierers 1 dargestellt. Der Dosierer 1 besteht aus einem Dosierrohr 5, das fest, aber lösbar mit dem freien Ende des Zuführrohres 2 verbunden ist, beispielsweise mit Hilfe einer Befestigungsschraube 9, und das im unteren Teil an einer Seite eine Aussparung 6 aufweist, die sich in einem Abstand vom freien Ende 14 des Dosierrohres 5 bis zum Ende 14 des Dosierrohres 5 erstreckt. Ferner umfaßt der Dosierer 1 einen Dosierhebel 11, der am oberen Ende eine Hebelkralle 12 und am unteren Ende eine Auflagefläche 16 aufweist. Der obere Teil des Dosierhebels 11 befindet sich teilweise im unteren Teil des Dosierrohres 5 und ist so in die Aussparung 6 eingepaßt, daß der obere Teil des Dosierhebels 11 mit Hebelkralle 12 leichtgängig in der Aussparung 6 bewegbar ist. Der Dosierhebel 11 ist in dem Dosierrohr 5 in einem Abstand vom freien Ende 14 des Dosierrohres 5 mit Hilfe eines Befestigungsmittels 17, z.B. einem Splint oder einer Kopfschraube mit Schaft und Mutter, in der Nähe der Aussparung 6 zwischen den der Aussparung 6 benachbarten, sich gegenüberliegenden Seiten des Dosierrohres 5 in der Weise aufgehängt, daß der Dosierhebel 11 um das Befestigungsmittel 17 als horizontaler Achse pendelförmig frei drehbar ist. Normalerweise werden beim Gebrauch Zuführrohr 2 und Dosierrohr 5 in einer schrägen Stellung gehalten, wie z.B. in den Figuren 1 und 2 gezeigt. Wenn in einer solchen Schrägstellung das Ende 14 des Dosierrohres 5 frei schwebend gehalten wird und keine äußeren Kräfte mit Ausnahme der Schwerkraft auf den Dosierhebel einwirken, befindet sich der Dosierhebel 11 in Ruhestellung, in der das Dosierrohr 5 am freien Ende 14 vom unteren Teil 15 des Dosierhebels 11 verschließbar ist. Eine von der Hebelkralle 12, der dem Inneren des Dosierrohres 5 zugewandten Seite des Dosierhebels 11 und der dieser gegenüberliegenden Innenwand des Dosierrohres 5 begrenzte Dosierkammer 13 ist in Ruhestellung des Dosierhebels 11 nach oben geöffnet, wie in Figur 2 gezeigt. In dieser Stellung kann das körnige, rieselfähige Material. 4, z.B. körniger Kunstdünger, aus dem Zuführrohr 2 über den daran anschließenden Teil des Dosierrohres 5 in die Dosierkammer 13 fallen.

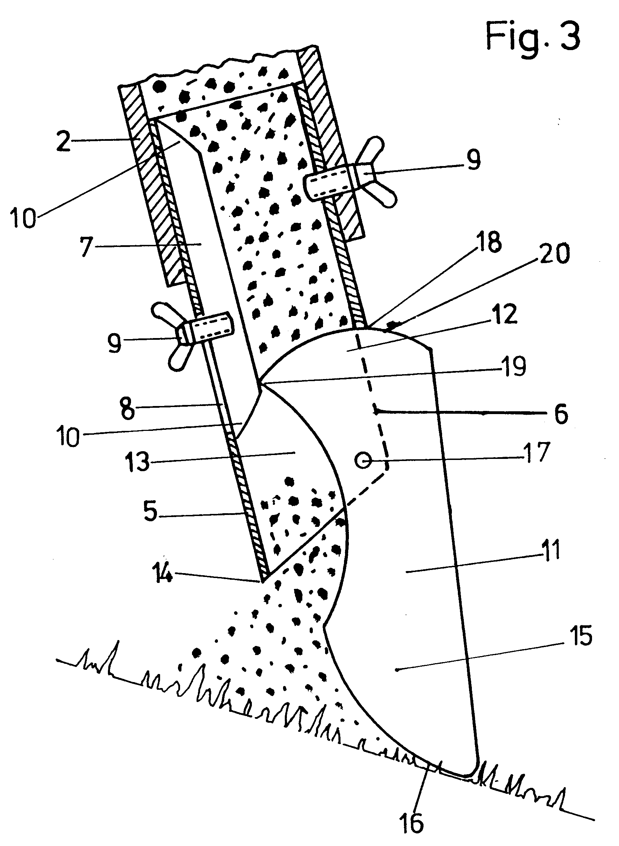

Wie in Figur 3 gezeigt, dreht sich der Dosierhebel 11 durch Aufdrücken der Auflagefläche 16 des Dosierhebels 11 auf eine feste Unterlage, z.B. auf den Erdboden, in eine Arbeitsstellung, in der das Dosierrohr 5 mit der Dosierkammer 13 am freien Ende 14 des Dosierrohres 5 geöffnet und gleichzeitig die Dosierkammer 13 nach oben durch die vorgezogene Stellung der Hebelkralle 12 absperrbar ist. Hierbei ist wesentlich, daß die obere Begrenzungsfläche 20 der Hebelkralle 12 an der oberen Kante 18 der Aussparung 6 dicht anliegt (s. Figur 2), damit in keiner Stellung des Dosierhebels 11 körniges Material an dieser Stelle austreten kann. Wesentlich ist ferner für den erfindungsgemäßen Zweck, daß der aus dem freien Ende 14 des Dosierrohres 5 herausragende untere Teil 15 des Dosierhebels 11 so ausgestaltet ist, daß in ihm der größere Teil der Masse des Dosierhebels 11 vereinigt ist Dadurch wird sichergestellt, daß beim Anheben der weiterhin in der Schräglage gehaltenen Vorrichtung 1 vom Boden der Dosierhebel 11 aufgrund seiner Schwerpunktlage durch sein Eigengewicht wieder in die Position der Ruhestellung zurückfällt, bei der das freie Ende 14 des Dosierrohres 5 und damit auch die Dosierkammer 13 unten geschlossen und die Dosierkammer 13 gleichzeitig oben geöffnet wird, so daß erneut das rieselfähige, körnige Material in die Dosierkammer 13 fallen kann.

Die in Figur 3 gezeigte Ausführungsform der erfindungsgemäßen Vorrichtung unterscheidet sich von der in Figur 2 dargestellten Ausführungsform dadurch, daß das Dosierrohr 5 an der der Aussparung 6 gegenüberliegenden Seite in Längsrichtung eine schlitzförmige Öffnung 8 aufweist, über die mittels einer Feststellschraube 9 ein im Innern des Dosierrohres 5 in Längsrichtung stufenlos verschiebbar angeordneter Schieber 7 in bestimmten Positionen feststellbar ist. Mit Hilfe dieses Schiebers 7 kann das Volumen der Dosierkammer 13 in gewissen Grenzen variiert werden. In Figur 3 ist der Schieber 7 in einer weit zurückgezogenen Stellung gezeigt, wobei der Schieber 7 vorzugsweise zum freien Ende 14 des Dosierrohres 5 hin eine abgeschrägte Endfläche 10 aufweist. Eine entsprechend abgeschrägte Endfläche 10 kann auch am anderen Ende des Schiebers 7 vorliegen, wie in Figur 3 dargestellt, was einen günstigen Einfluß auf den Strömungsfluß des körnigen, rieselfähigen Materials hat.

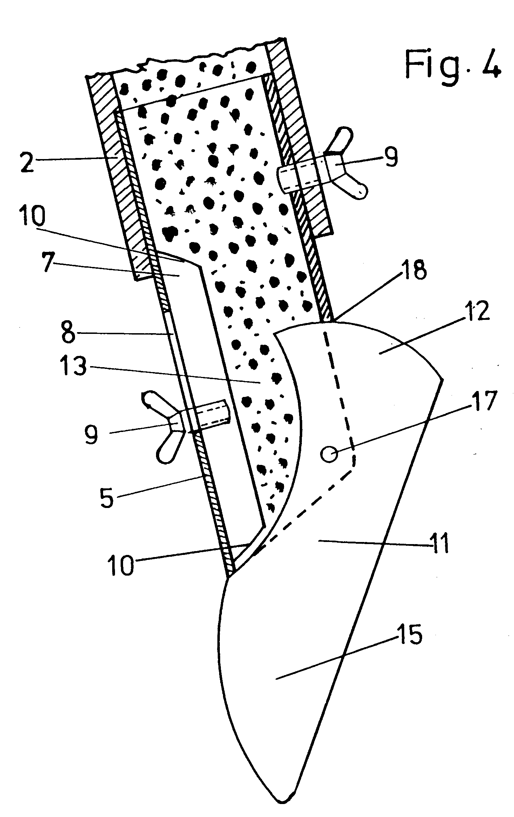

In Figur 4 ist die gleiche Ausführungsform des Dosierers 1 wie in Figur 3 dargestellt, wobei der Schieber 7 jedoch in eine weit vorgezogene Stellung verschoben ist, in der sich die eine abgeschrägte Endfläche 10 des Schiebers 7 sehr nahe am freien Ende 14 des Dosierrohres 5 befindet. Gleichzeitig ist in Figur 4 der Dosierhebel 11 in seiner Ruhestellung gezeigt, in der die Dosierkammer 13 unten geschlossen und oben zum Dosierrohr 5 und Zuführrohr 2 hin geöffnet ist.

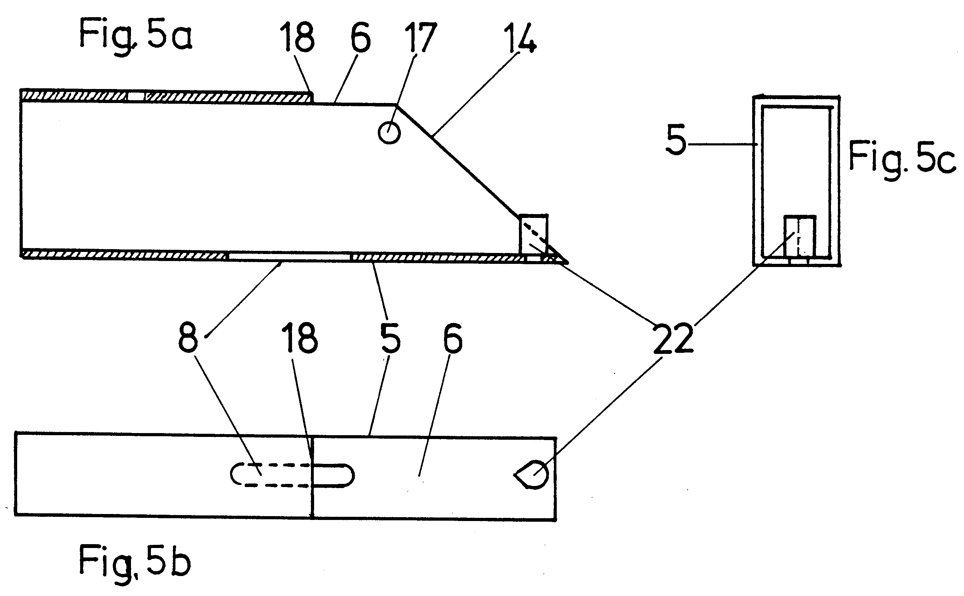

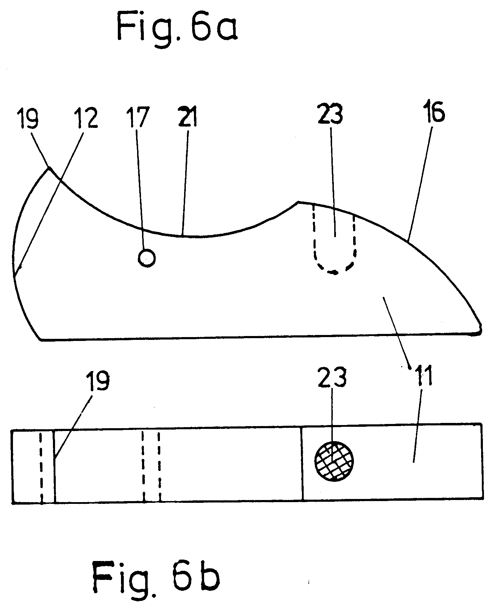

In den Figuren 5a, 5b und 5c ist eine besondere Ausführungsform des Dosierrohres 5 mit Aussparung 6, die von der oberen Kante 18 bis zum freien Ende 14 des Dosierrohres 5 reicht, und einer an der der Aussparung 6 gegenüberliegenden Seite befindlichen schlitzförmigen Öffnung 8 sowie einer Bohrung für das Befestigungsmittel 17 dargestellt, bei der an der der Aussparung 6 gegenüberliegenden Innenseite des Dosierrohres 5 in der Nähe des freien Endes 14 eine Streunase 22 angeordnet ist, die aufgrund ihrer ins Innere des Dosierrohres 5 gerichteten keilförmigen Seite den Zweck hat, das aus der geöffneten Dosierkammer 13 herausfallende körnige Material über die gesamte Öffnungsbreite des freien Endes 14 des Dosierrohres 5 zu streuen. Damit der Dosierhebel 11 in seiner Ruhestellung dicht an dem freien Ende 14 des Dosierrohres 5 anliegen kann, ist gemaß den Figuren 6a und 6b in dem Dosierhebel 11 eine der Größe der Streunase 22 angepaßte Öffnung 23 vorgesehen, die in der Ruhestellung des Dosierhebels 11 die Streunase 22 aufnimmt.

In einer weiteren bevorzugten Ausführungsform weist das Dosierrohr 5 über die Länge der schlitzförmigen Öffnung 8 außen eine in den Figuren nicht dargestellte kalibrierte Strichteilung auf, die zur Bestimmung der verschiedenen Positionen des Schiebers 7 in dem Dosierrohr 5 dienen kann.

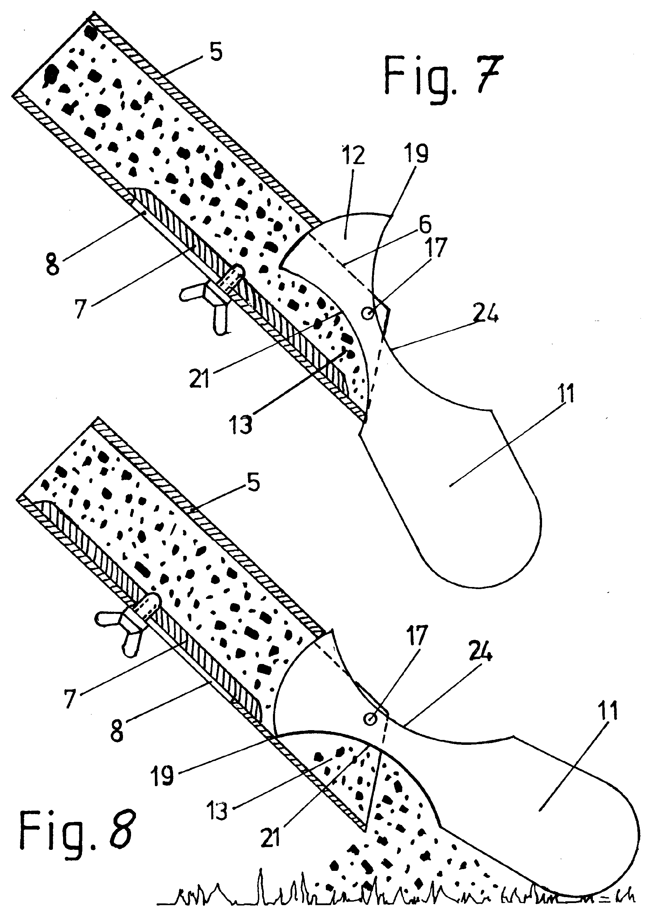

Der Dosierhebel 11 kann in seiner Form vielfach variiert werden, vorausgesetzt, daß er die ihm im Rahmen der erfindungsgemäßen Vorrichtung zugewiesenen Funktionen voll erfüllt. In seiner einfachsten Form weist der Dosierhebel 11 beispielsweise eine von der Auflagefläche 16 bis zur Hebelkralle 12 reichende, dem Inneren des Dosierrohres 5 zugewandte ebene Seite auf (in den Figuren nicht dargestellt), wobei die Schnittlinie zwischen der ebenen Seite und der Hebelkralle 12 eine Kante 19 bildet, die zweckmäßigerweise spitz zulaufend ausgestaltet ist, damit sie in der Arbeitsstellung des Dosierhebels 11 dicht an der Innenwand des Dosierrohres 5 bzw. an dem Schieber 7 anliegt, wie in den Figuren 3 und 8 gezeigt, und dadurch die Dosierkammer 13 wirksam nach oben schließt.

In einer besonders bevorzugten Ausführungsform weist die die Dosierkammer 13 begrenzende Seitenfläche des Dosierhebels 11 im Bereich der Dosierkammer 13 eine Auswölbung oder Ausnehmung 21 zur Vergrößerung der Dosierkammer 13 auf, wie sie in den Figuren 1 bis 4 und 6a dargestellt ist. Diese Auswölbung oder Ausnehmung 21 kann je nach der gewünschten Größe der Dosierkammer stärker oder schwächer ausfallen.

In einer weiteren, ebenso besonders bevorzugten Ausführungsform, die in den Figuren 7 und 8 dargestellt ist, ist der Dosierhebel 11 zusätzlich an der der Ausnehmung 21 gegenüberliegenden Seite mit einer weiteren Auswölbung oder Ausnehmung 24 versehen, die sich von der ersten Ausnehmung 21 durch ihre Größe unterscheidet, so daß ein einfaches Umsetzen des Dosierhebels 11 durch Lösen des Befestigungsmittels 17 und umgekehrtes Wiedereinsetzen des Dosierhebels 11 eine Änderung des Volumens der Dosierkammer 13 bewirkt. Ein mit doppelseitiger Ausnehmung 21 und 24 versehener Dosierhebel 11 ist in Figur 7 in Ruhestellung und in Figur 8 in Arbeitsstellung dargestellt, wobei gleichzeitig der Schieber 7, der in Figur 7 in vorgeschobener Position gezeigt ist, durch Zurückziehen, z.B. in eine in Figur 8 gezeigte Position, eine weitere Volumenänderung der Dosierkammer 13 ermöglicht.

Ferner kann die Auflagefläche 16 des Dosierhebels 11 verschieden geformt sein, wobei sich die Form z.B. nach der Beschaffenheit der festen Unterlage richtet, mit der sie in der Arbeitsstellung des Dosierhebels 11 in Berührung kommt. In einer bevorzugten Ausführungsform weist der Dosierhebel 11 eine konvex-gekrümmte Auflagefläche 16 auf, wie sie in den Figuren 2 bis 4 dargestellt ist.

## Patentansprüche

1. Vorrichtung zum Dosieren von körnigem, rieselfähigem Material, bestehend aus einem Behälter zur Aufnahme des Materials, einem mit dem Behälter verbundenen Zuführrohr, durch das das Material einem am freien Ende des Zuführrohres abnehmbar befestigten Dosierer zugeführt wird, sowie gegebenenfalls Einrichtungen zur Einstellung des Dosierers, dadurch gekennzeichnet, daß der Dosierer (1) aus einem Dosierrohr (5), das fest, aber lösbar mit dem freien Ende des Zuführrohres (2) verbunden ist und im unteren Teil an einer Seite eine in einem Abstand sich bis zum freien Ende (14) des Dosierrohres (5) erstreckende Aussparung (6) aufweist, und aus einem Dosierhebel (11) mit Hebelkralle 12 am oberen Ende des Dosierhebels (11) und einer Auflagefläche (16) am unteren Ende (15) des Dosierhebels (11) besteht, wobei sich der obere Teil des Dosierhebels (11) teilweise im unteren Teil des Dosierrohres (5), eingepaßt in die Aussparung (6), befindet und der Dosierhebel (11) in dem Dosierrohr (5) in einem Abstand vom freien Ende (14) des Dosierrohres (5) mit Hilfe eines Befestigungsmittels (17) in der Nähe der Aussparung (6) zwischen den der Aussparung (6) benachbarten, sich gegenüberliegenden Seiten des Dosierrohres (5) in der Weise aufgehängt ist, daß er um das Befestigungsmittel (17) als horizontaler Achse pendelförmig frei drehbar ist, und zwar bei einer gegenüber einer festen Unterlage schrägen Stellung von Zuführ- und Dosierrohr (2;5), bei der sich die Aussparung (6) an der Oberseite des Dosierrohres (5) befindet, in eine Ruhestellung, in der das Dosierrohr (5) am freien Ende (14) vom Dosierhebel (11) verschließbar und gleichzeitig eine von der Hebelkralle (12), der dem Inneren des Dosierrohres (5) zugewandten Seite des Dosierhebels (11) und der dieser gegenüberliegenden Innenwand des Dosierrohres (5) begrenzte Dosierkammer (13) durch die Stellung der Hebelkralle (12) nach oben geöffnet ist, und durch Aufdrücken der Auflagefläche (16) auf eine feste Unterlage in eine einstellbare Arbeitsstellung des Dosierhebels (11), in der das Dosierrohr (5) mit der Dosierkammer (13) am freien Ende (14) des Dosierrohres (5) geöffnet und gleichzeitig die Dosierkammer (13) nach oben durch die vorgezogene Stellung der Hebelkralle (12) absperrbar ist, wobei in jeder Stellung des Dosierhebels (11) die obere Begrenzungsfläche (20) der Hebelkralle (12) an der oberen Kante (18) der Aussparung (6) dicht anliegt, und wobei der aus dem freien Ende (14) des Dosierrohres (5) herausragende untere Teil (15) des Dosierhebels (11) so ausgestaltet ist, daß in ihm der größere Teil des Masse des Dosierhebels (11) vereinigt ist.

2. Vorrichtung nach Anspruch 1, dadurch gekennzeichnet, daß der Dosierhebel (11) eine konvex-gekrümmte Auflagefläche (16) aufweist.

3. Vorrichtung nach Anspruch 1 oder 2, dadurch gekennzeichnet, daß die die Dosierkammer (13) begrenzende Seitenfläche des Dosierhebels (11) im Bereich der Dosierkammer (13) eine Ausnehmung (21) zur Vergrößerung der Dosierkammer (13) aufweist.

4. Vorrichtung nach Anspruch 3, dadurch gekennzeichnet, daß der Dosierhebel (11) an der der Ausnehmung (21) gegenüberliegenden Seite zusätzlich eine weitere Ausnehmung (24) aufweist, die sich von der ersten Ausnehmung (21) durch ihre Größe unterscheidet.

5. Vorrichtung nach den Ansprüchen 1 bis 4, dadurch gekennzeichnet, daß das Dosierrohr (5) an der der Aussparung (6) gegenüberliegenden Seite in Längsrichtung eine schlitzförmige Öffnung (8) aufweist, über die mittels einer Feststellschraube (9) ein im Innern des Dosierrohres (5) in Längsrichtung stufenlos verschiebbar angeordneter Schieber (7) in bestimmten Positionen feststellbar ist.

6. Vorrichtung nach Anspruch 5, dadurch gekennzeichnet, daß der Schieber (7) zum freien Ende (14) des Dosierrohres (5) hin eine abgeschrägte Endfläche (10) aufweist.

7. Vorrichtung nach Anspruch 5 oder 6, dadurch gekennzeichnet, daß das Dosierrohr (5) über die Länge der schlitzförmigen Öffnung (8) außen eine kalibrierte Strichteilung aufweist.

8. Vorrichtung nach den Ansprüchen 1 bis 7, dadurch gekennzeichnet, daß an der der Aussparung (6) gegenüberliegenden Innenseite des Dosierrohres (5) in der Nähe des freien Endes (14) des Dosierrohres (5) eine Streunase (22) angeordnet ist, die mit einer der Größe der Streunase (22) angepaßten Öffnung (23) im Dosierhebel (11) in dessen Ruhestellung in Eingriff steht.

## Claims

1. Apparatus for metering granular, flowing material consisting of a container for holding the material, a feed pipe connected to the container, through which the material is fed to a metering device which is attached so that it can be removed at the free end of the feed pipe as well as, where applicable, devices for setting the metering device, characterized in that the metering device (1) consists of a metering tube (5) which is rigidly connected, although in a releasable manner, to the free end of the feed pipe (2) and which is provided in the lower part on one side with a recess (6) extending with a clearance up to the free end (14) of the metering tube (5) and of a metering lever (11) with lever claw 12 at the upper end of the metering lever (11) and a bearing surface (16) at the lower end (15) of the metering lever (11) so that the upper part of the metering lever (11) is located partially in the lower part of the metering tube (5), fitted into the recess (6) and the metering lever (11) is mounted in the metering tube (5) at a distance from the free end (14) of the metering tube (5) with the aid of an attachment means (17) in the vicinity of the recess (6) between the opposite sides of the metering tube (5) adjacent to the recess (6) in such a way that it can be turned freely in a pendulum-like manner about the attachment means (17) as horizontal axis and with a position of feed pipe and metering tube (2;5) which is oblique in relation to a fixed base, with the recess (6) being located at the upper side of the metering tube (5), into a rest position, in which the metering tube (5) can be closed at the free end (14) by the metering lever (11) and at the same time a metering chamber (13) defined by the lever claw (12), the side of the metering lever (11) turned towards the inside of the metering tube (5) and the inside wall of the metering tube (5) opposite this is open upwards by the position of the lever claw (12) and by pressing the bearing surface (16) on to a fixed base into an adjustable working position of the metering lever (11), in which the metering tube (5) with the metering chamber (13) is open at the free end (14) of the metering tube (5) and at the same time the metering chamber (13) can be closed upwards by the position of the lever claw (12) which has been moved forward so that in each position of the metering lever (11) the upper limit surface (20) of the lever claw (12) abuts tightly against the upper edge (18) of the recess (6) and so that the lower part (15) of the metering lever (11) protruding from the free end (14) of the metering tube (5) is shaped in such a way that the larger part of the mass of the metering lever (11) is combined in it.

2. Apparatus according to claim 1, characterized in that the metering lever (11) is provided with a convex-curved bearing surface (16).

3. Apparatus according to claim 1 or 2, characterized in that the side surface of the metering lever (11) limiting the metering chamber (13) is provided in the area of the metering chamber (13) with a recess (21) for enlarging the metering chamber (13).

4. Apparatus according to claim 3, characterized in that the metering lever (11) is provided additionally at the side opposite the recess (21) with a further recess (24) which is distinguished from the first recess (21) by its size.

5. Apparatus according to claims 1 to 4, characterized in that the metering tube (5) is provided in the longitudinal direction at the side opposite the recess (6) with a slit-shaped opening (8), over which a slider (7) which is disposed so that it can be slid without stages in the longitudinal direction inside the metering tube (5) can be fixed in certain positions by means of a lock bolt (9).

6. Apparatus according to claim 5, characterized in that the slider (7) is provided towards the free end (14) of the metering tube (5) with a beveled end surface (10).

7. Apparatus according to claim 5 or 6, characterized in that the metering tube (5) is provided with a calibrated line graduation on the outside over the length of the slit-shaped opening (8).

8. Apparatus according to claims 1 to 7, characterized in that a spreading nose (22) is disposed at the inside of the metering tube (5) opposite the recess (6) in the vicinity of the free end (14) of the metering tube (5), which is in engagement with an opening (23) in the metering lever (11) which is adapted to the size of the spreading nose (22) in the rest position of the metering lever.

## Revendications

1. Dispositif pour doser des matériaux en grains pouvant s'écouler, constitué d'un récipient destiné à recevoir les matériaux, un tube d'alimentation connecté au récipient par lequel les matériaux sont amenés à un doseur fixé de manière amovible à l'extrémité libre du tube d'alimentation ainsi que, éventuellement, des appareils pour régler le doseur, caractérisé en ce que le doseur (1) est constitué d'un tube doseur (5) qui est connecté de manière rigide mais amovible à l'extrémité libre du tube d'alimentation (2) et qui présente, dans la partie inférieure et sur un côté, une cavité (6) s'étendant à une certaine distance jusqu'à l'extrémité libre (14) du tube doseur (5) et d'un levier doseur (11), avec une griffe de levier (12) à l'extrémité supérieure du levier doseur (11) et une surface d'appui (16) à l'extrémité inférieure (15) du levier doseur (11), tandis que la partie supérieure du levier doseur (11) se trouve partiellement dans la partie inférieure du tube doseur (5) ajustée dans la cavité (6) et que le levier doseur (11) est suspendu dans le tube doseur (5) à une distance de l'extrémité libre (14) du tube doseur (5) à l'aide d'un moyen de fixation (17) à proximité de la cavité (6) entre les côtés du tube doseur (5) voisin de la cavité (6), opposés l'un à l'autre, de manière qu'ils puissent tourner librement comme un pendule autour du moyen de fixation (17) servant d'axe horizontal et que, pour une position oblique vis-à-vis d'un support fixe du tube d'alimentation (2) et du tube doseur (5) pour laquelle la cavité (6) se trouve sur le côté supérieur du tube doseur (5) et se trouve dans une position de non-fonctionnement pour laquelle le tube doseur (5) peut être fermé à l'extrémité libre (14) par le levier doseur (11) et, simultanément, par la griffe de levier (12) du côté du levier doseur (11) tourné vers l'intérieur du tube doseur (5) et de la chambre doseuse (13) délimitée par la paroi intérieure opposée du tube doseur (5) est ouverte vers le haut par la position de la griffe de levier (12) et par la pression de la surface d'appui (16) sur un support solide dans une position de fonctionnement réglable du levier doseur (11) dans laquelle le tube doseur (5) est ouvert avec la chambre doseuse (13) à l'extrémité libre (14) du doseur (5) et, simultanément, la chambre doseuse (13) peut être obturée vers le haut par la position modifiée de la griffe de levier (12) tandis que, dans chaque position du levier doseur (11), la surface de limitation supérieure (20) de la griffe de levier (12) appuie de manière étanche sur le bord supérieur (18) de la cavité (6) et tandis que la partie inférieure (15) du levier doseur (11) faisant saillie de l'extrémité libre (14) du tube doseur (5) est conçue de façon à être réunie à la plus grande partie de la masse du levier doseur (11).

2. Dispositif selon la revendication 1, caractérisé en ce que le levier doseur (11) présente une surface d'appui (16) à courbure convexe.

3. Dispositif selon la revendication 1 ou 2, caractérisé en ce que la face latérale du levier doseur (11) délimitant la chambre doseuse (13) présente, dans la région de la chambre doseuse (13), une cavité (21) pour agrandir la chambre doseuse (13).

4. Dispositif selon la revendication 3, caractérisé en ce que le levier doseur (11) présente, en outre, sur le côté opposé à la cavité (21), une autre cavité (24) qui diffère par sa grandeur de la première cavité (21).

5. Dispositif selon les revendications 1 à 4, caractérisé en ce que le tube doseur (5) présente, sur le côté opposé à la cavité (6) en direction longitudinale, une ouverture en forme de fente (8) par laquelle un coulisseau (7) peut être fixé à l'aide d'un écrou de réglage (9) dans des positions déterminées à l'intérieur du tube doseur (5) en pouvant coulisser de manière continue en direction longitudinale.

6. Dispositif selon la revendication 5, caractérisé en ce que le coulisseau (7) présente une surface terminale (10) biseautée vers l'extrémité libre (14) du tube doseur (5).

7. Dispositif selon la revendication 5 ou 6, caractérisé en ce que le tube doseur (5) présente extérieurement une graduation étalonnée sur la longueur de l'ouverture en forme de fente (8).

8. Dispositif selon les revendications 1 à 7, caractérisé en ce qu'il existe, sur le côté intérieur du tube doseur (5) opposé à la cavité (6) et à proximité de l'extrémité libre (14) du tube doseur (5), un ergot d'épandage (22) qui s'engage dans une ouverture (23) adaptée à la grandeur de l'ergot d'épandage (22) dans le levier doseur (11) en position de non-fonctionnement de celui-ci.
